# FASCICULE DE BREVET EUROPEEN

(11) **EP 3 386 087 B1**
(45) Date de publication et mention de la délivrance du brevet: **13.05.2020**
(21) Numéro de dépôt: 18164099.6
(22) Date de dépôt: 26.03.2018
(51) Int. Cl.: H02M 3/28, H02J 7/02

(54) **SYSTÈME DE CHARGEUR ÉLECTRIQUE TRIPHASE ET MONOPHASE POUR VÉHICULE ÉLECTRIQUE OU HYBRIDE**
EINPHASIGES UND DREIPHASIGES ELEKTRISCHES LADESYSTEM FÜR EIN ELEKTRO- ODER HYBRIDFAHRZEUG
THREE-PHASE AND SINGLE-PHASE ELECTRIC CHARGING SYSTEM FOR ELECTRIC OR HYBRID VEHICLE

(30) Priorité: 03.04.2017 FR 1752862
(43) Date de publication de la demande: 10.10.2018
(73) Titulaire: Valeo Siemens eAutomotive France SAS, 95800 Cergy (FR)
(72) Inventeur: YANG, Gang, 92400 COURBEVOIE (FR); BOUCHEZ, Boris, 3057 SOLBERGELVA (NO)
(74) Mandataire: Argyma

(56) Documents cités:
- US-A1- 2013 134 935
- MOHAMMADPOUR ALI ET AL: "Series-Input Parallel-Output Modular-Phase DC-DC Converter With Soft-Switching and High-Frequency Isolation", IEEE TRANSACTIONS ON POWER ELECTRONICS, INSTITUTE OF ELECTRICAL AND ELECTRONICS ENGINEERS, USA, vol. 31, no. 1, 1 janvier 2016 (2016-01-01), pages 111-119, XP011669828, ISSN: 0885-8993, DOI: 10.1109/TPEL.2015.2398813 [extrait le 2015-09-21]

## Description

### DOMAINE TECHNIQUE ET OBJET DE L'INVENTION

De façon générale, l'invention concerne un système électrique pour la charge d'unités de stockage d'énergie électrique, en particulier un tel système électrique embarquée dans un véhicule automobile, notamment électrique ou hybride.

Plus précisément, dans le contexte d'un véhicule électrique ou hybride comprenant au moins une batterie d'alimentation d'un moteur de traction du véhicule, il est connu qu'un système de chargeur embarqué, couramment désigné par l'homme du métier sous l'acronyme OBC pour « On Board Charger » en anglais, signifiant « chargeur embarqué », soit mis en œuvre. La présente invention concerne notamment dans ce contexte, un système électrique formant un chargeur embarqué amélioré, apte à fonctionner de façon optimale aussi bien lorsqu'il est connecté à un réseau électrique triphasé que lorsqu'il est alimenté par un réseau électrique monophasé.

### ETAT DE LA TECHNIQUE

Comme cela est connu, un véhicule électrique ou hybride comprend un système de motorisation électrique alimenté par une batterie d'alimentation haute tension via un réseau électrique embarqué haute tension et une pluralité d'équipements électriques auxiliaires alimentés par une batterie d'alimentation basse tension via un réseau électrique embarqué basse tension. Ainsi, la batterie d'alimentation haute tension assure une fonction d'alimentation en énergie du système de motorisation électrique permettant la propulsion du véhicule. La batterie d'alimentation basse tension alimente des équipements électriques auxiliaires, tels que des calculateurs embarqués, des moteurs de lève-vitres, un système multimédia, etc. La batterie d'alimentation haute tension délivre typiquement 100 V à 900 V, de préférence de 100 V à 500 V, tandis que la batterie d'alimentation basse tension délivre typiquement 12 V, 24 V ou 48 V. Lesdites deux batteries d'alimentation haute et basse tension doivent pouvoir être chargées.

La recharge en énergie électrique de la batterie d'alimentation haute tension est réalisée en la connectant, via un réseau électrique haute tension du véhicule, à un réseau électrique externe, par exemple le réseau d'alimentation électrique alternatif domestique. En pratique, selon qu'il s'agisse d'une borne de recharge dédiée à la recharge de batterie de véhicules électriques ou hybrides ou du réseau d'alimentation électrique alternatif domestique, ledit réseau électrique externe peut être triphasé ou monophasé.

Un réseau électrique externe triphasé permet une recharge plus rapide de la batterie haute tension du véhicule. Cependant, un tel réseau triphasé n'est pas toujours disponible et le système de chargeur embarqué, désigné système OBC, doit permettre la charge de la batterie haute tension, y compris lorsque le réseau électrique externe est monophasé.

De façon générale, comme cela est connu, les systèmes OBC comprennent principalement un convertisseur alternatif-continu et un convertisseur continu-continu, de préférence isolé galvaniquement. Le convertisseur alternatif-continu est généralement à correction de facteur de puissance, désigné convertisseur alternatif-continu PFC (pour « Power Factor Correction » en anglais). Le convertisseur alternatif-continu PFC, dans sa fonction de correction du facteur de puissance, élimine les déformations du réseau électrique sur le courant absorbé pour éviter l'apparition de courants harmoniques néfastes au réseau électrique externe. Le convertisseur alternatif-continu PFC permet ainsi de mettre le courant et la tension d'entrée en phase.

La problématique générale, dans le contexte de la présente invention, concerne par conséquent la conception d'un système de chargeur électrique permettant un fonctionnement en triphasé et en monophasé.

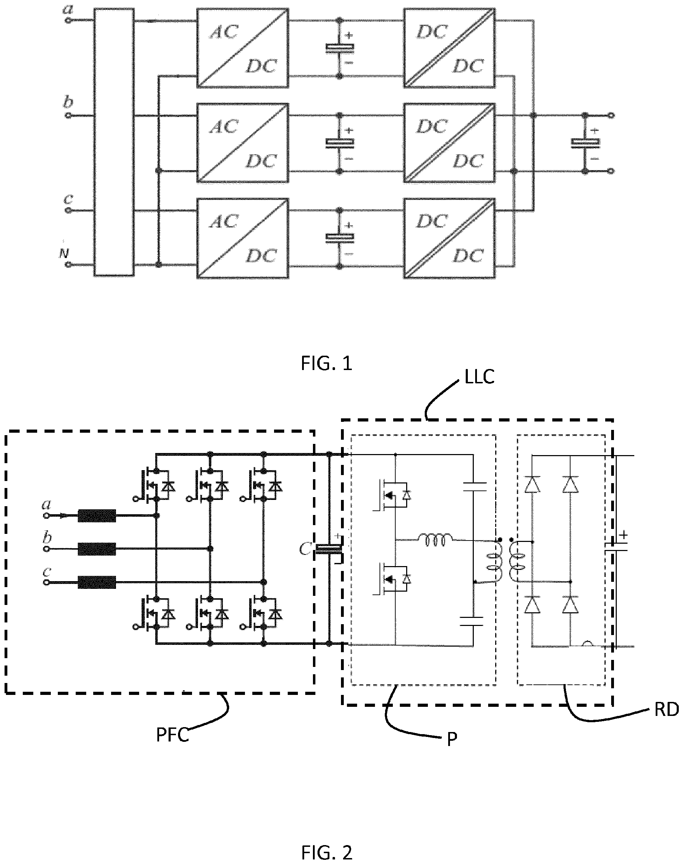

Selon l'état de la technique, pour permettre la charge d'une batterie à partir d'un réseau électrique externe qui puisse être triphasé ou monophasé, il est connu d'utilisé un système électrique comprenant trois convertisseurs alternatif-continu monophasés AC/DC connectés chacun à un convertisseur continu-continu monophasé DC//DC respectif, comme représenté à la figure 1.

Cette solution présente l'avantage de permettre le chargement d'une batterie de véhicule à partir d'un réseau électrique externe monophasé ou triphasé, avec une grande souplesse d'utilisation et un bon rendement électrique. Cependant, le nombre de composants nécessaires, en particulier la multiplication des convertisseurs, augmentent considérablement le coût et l'encombrement de tels systèmes électriques. Il est par conséquent nécessaire de développer une solution plus compacte et économique. De plus, il est à noter que, dans cette topologie, la présence d'une branche neutre N est nécessaire pour équilibrer les branches a, b, c des convertisseurs alternatif-continu AC/DC.

Une solution connue, dans cette optique, consiste à mettre en œuvre un système OBC composé d'un seul convertisseur alternatif-continu PFC triphasé connecté à un convertisseur continu-continu LLC, comme représenté à la figure 2. Comme cela est connu, ledit convertisseur continu-continu LLC consiste typiquement en un circuit résonnant isolé comprenant un circuit primaire P et un circuit secondaire redresseur RD.

Cependant, si la compacité est naturellement meilleure, l'efficacité en monophasé est très faible, dans la mesure où seuls deux bras du convertisseur alternatif-continu sont exploités, le système fonctionnant au mieux au tiers de sa puissance théorique.

Dans le but d'améliorer la performance des systèmes de chargeur électrique, en ce qu'ils permettent le chargement d'une batterie à partir d'un réseau électrique externe triphasé ou monophasé de façon optimale tout en préservant leur compacité, la présente invention propose un système de chargeur électrique comprenant un convertisseur alternatif-continu, typiquement un convertisseur alternatif-continu PFC triphasé et un convertisseur continu-continu comprenant deux circuits convertisseurs continu-continu connectés en série du convertisseur alternatif-continu PFC triphasé et en parallèle en sortie. Un tel système est connu par le document US2013/134935 A1. Toutefois, ce document ne divulgue pas un mode de fonctionnement triphasé et un mode de fonctionnement monophasé, permettent de bénéficier d'un rendement élevé, que le réseau électrique externe soit triphasé ou monophasé.

### PRESENTATION GENERALE DE L'INVENTION

Plus précisément, l'invention vise un système électrique de chargeur électrique destiné à charger une batterie depuis un réseau électrique extérieur, notamment destiné à être embarqué dans un véhicule électrique ou hybride pour charger une batterie, entrainant le véhicule, depuis un réseau électrique extérieur audit véhicule, ledit système électrique comprenant :
un convertisseur alternatif-continu triphasé comprenant des bornes d'entrées destinées à être connectées à un réseau électrique extérieur, une borne de sortie haute et une borne de sortie basse,
un convertisseur continu-continu, ledit convertisseur continu-continu présentant deux circuits convertisseurs continu-continu, un premier circuit convertisseur continu-continu ayant une borne d'entrée haute connectée à la borne de sortie haute du convertisseur alternatif-continu et un deuxième circuit convertisseur continu-continu ayant une borne d'entrée basse connectée à la borne de sortie basse du convertisseur alternatif-continu,
la borne d'entrée basse du premier circuit convertisseur continu-continu étant connectée à la borne d'entrée haute du deuxième circuit convertisseur continu-continu, et,
la borne de sortie haute du premier circuit convertisseur étant connectée à la borne de sortie haute du deuxième circuit convertisseur continu-continu et la borne de sortie basse du premier circuit convertisseur étant connectée à la borne de sortie basse du deuxième circuit convertisseur continu-continu.

Grâce au système électrique selon l'invention, il est proposé un système de chargeur électrique, notamment pour la charge d'une batterie de véhicule, qui soit compact et efficient en triphasé et en monophasé.

En outre, pour commander le système de chargeur électrique selon l'invention, il n'est nécessaire de disposer que d'une seule unité de contrôle pour la partie convertisseur alternatif-continu triphasé et d'une seule unité de contrôle pour la partie convertisseur continu-continu.

Le convertisseur continu-continu est configuré pour que, dans un mode de fonctionnement triphasé, lesdits premier et deuxième circuits convertisseurs continu-continu reçoivent du courant délivré par le convertisseur alternatif-continu, et pour que, dans un mode de fonctionnement monophasé, un seul desdits premier et deuxième circuits convertisseurs continu-continu reçoive du courant délivré par le convertisseur alternatif-continu.

Avantageusement, le système comprend au moins un interrupteur configuré pour court-circuiter l'entrée de l'un desdits premier et deuxième circuits convertisseurs continu-continu dans le mode de fonctionnement monophasé.

Avantageusement, ledit interrupteur relie la borne de sortie haute du convertisseur alternatif-continu ou la borne de sortie basse du convertisseur alternatif-continu au point de connexion entre la borne d'entrée basse du premier circuit convertisseur continu-continu et la borne d'entrée haute du deuxième circuit convertisseur, et dans lequel, dans le mode de fonctionnement monophasé, l'interrupteur est passant pour court-circuiter l'entrée du circuit convertisseur continu-continu entre les bornes d'entrée duquel l'interrupteur est connecté.

Avantageusement, chaque circuit convertisseur de tension comprend un circuit primaire et un circuit secondaire, lesdits circuits primaires étant connectés en série entre la borne de sortie haute et la borne de sortie basse du convertisseur alternatif-continu triphasé, et lesdits circuits secondaires étant connectés en parallèle, entre une borne de sortie haute et une borne de sortie basse dudit convertisseur continu-continu.

Selon un mode de réalisation, lesdits premier et deuxième circuits convertisseurs continu-continu consistent chacun en un circuit résonnant.

Avantageusement, lesdits premier et deuxième circuits convertisseurs continu-continu sont configurés pour fonctionner avec un entrelacement.

Selon un mode de réalisation, lesdits premier et deuxième circuits convertisseurs continu-continu sont configurés pour fonctionner avec un entrelacement dans le mode de fonctionnement triphasé.

Selon un mode de réalisation, lesdits premier et deuxième circuits convertisseurs continu-continu sont par ailleurs déphasés de 90°.

Dans ce cas, la partie convertisseur continu-continu se trouve naturellement équilibré. De plus, le courant d'ondulation est naturellement réduit.

Selon un mode de réalisation, le convertisseur alternatif-continu triphasé comprend au moins une inductance par phase, chaque inductance ayant une première borne formant une borne d'entrée du convertisseur alternatif-continu, et une deuxième borne connectée à un bras, ledit bras étant connecté entre la borne de sortie haute et la borne de sortie basse du convertisseur alternatif-continu du convertisseur alternatif continu triphasé.

Selon un mode de réalisation, chaque bras comprend deux interrupteurs de manière à relier l'inductance correspondante d'une part à la borne de sortie haute du convertisseur alternatif-continu, via un interrupteur respectif, et d'autre part à la borne de sortie basse du convertisseur alternatif-continu, via un interrupteur respectif.

Selon un mode de réalisation alternatif, le convertisseur alternatif-continu triphasé comprend un circuit de type Vienna et une borne de sortie intermédiaire.

Avantageusement, le circuit convertisseur continu-continu qui n'est pas court-circuité par l'interrupteur comprend un bras capacitif connecté entre la borne d'entrée haute et la borne d'entrée basse dudit circuit convertisseur continu-continu,
le système comportant un deuxième interrupteur connecté à la borne de sortie intermédiaire et configuré pour, dans le mode de fonctionnement triphasé, relier la borne de sortie intermédiaire avec le point de connexion entre les deux circuits convertisseurs continu-continu ; et, dans le mode de fonctionnement monophasé, relier la borne de sortie intermédiaire avec un point milieu du bras capacitif du convertisseur continu-continu qui n'est pas court-circuité par l'interrupteur.

Selon un mode de réalisation, le convertisseur continu-continu est isolé galvaniquement.

### DESCRIPTION DES FIGURES

L'invention sera mieux comprise à la lecture de la description qui va suivre, donnée uniquement à titre d'exemple, et se référant aux dessins annexés sui représentent :
- la figure 1, le schéma fonctionnel d'un système OBC triphasé selon l'état de l'art ;
- la figure 2, le schéma fonctionnel d'un autre exemple de système OBC triphasé selon l'état de l'art ;
- la figure 3, le schéma électronique simplifié d'un système électrique selon l'invention, dans un premier mode de réalisation ;
- la figure 4, le schéma électronique simplifié d'un système électrique selon l'invention, dans un deuxième mode de réalisation.

### DESCRIPTION DETAILLEE DE L'INVENTION

Il est rappelé que la présente invention est décrite ci-après à l'aide de différents modes de réalisation non limitatifs et est susceptible d'être mise en œuvre dans des variantes à la portée de l'homme du métier, également visées par la présente invention.

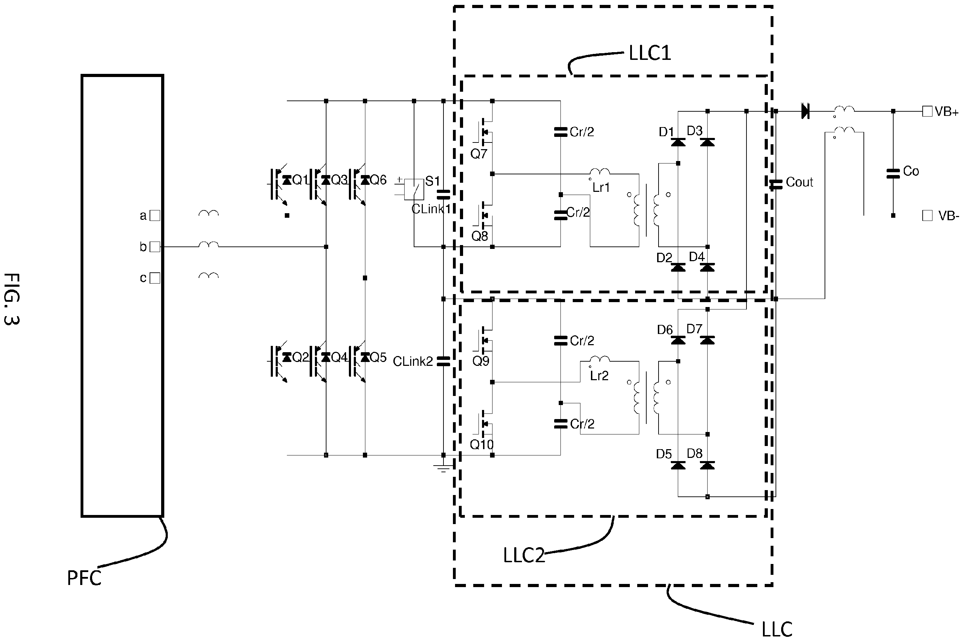

En référence à la figure 3, il est présenté un exemple de système électrique selon l'invention, destiné à la charge d'une batterie d'un véhicule, en particulier électrique ou hybride, connectée à ses bornes de sortie VB+, VB-.

Un tel système électrique comprend un convertisseur alternatif-continu à correction du facteur de puissance présentant trois branches a, b, c, désigné convertisseur alternatif-continu PFC triphasé. Le convertisseur PFC triphasé est configuré pour être connecté à un réseau électrique externe (non représenté), qui peut être triphasé ou monophasé. Un réseau électrique externe triphasé permet une recharge plus rapide. Un réseau électrique monophasé présente l'avantage de pouvoir être un réseau électrique alternatif domestique, typiquement disponible au domicile de particuliers utilisateurs de véhicules électriques ou hybrides.

Le courant alternatif est redressé et une tension continue est délivrée en sortie du convertisseur alternatif-continu PFC. Chaque branche a, b, c du convertisseur alternatif-continu PFC est connectée à une borne de sortie haute et, respectivement, à une borne de sortie basse. Au moins un élément de commutation Q1, Q2, Q3, Q4, Q5, Q6, tel qu'un transistor bipolaire à grille isolé, IGBT selon l'acronyme en anglais signifiant « Isolated Gâte Bipolar Transistor », ou un transistor à effet de champ à grille isolé, désigné MOSFET selon l'acronyme en anglais signifiant « Metal Oxide Semiconductor Field Effect Tansistor », est placé dans chaque branche entre ladite borne de sortie haute et basse. Plus précisément, le convertisseur alternatif-continu PFC triphasé comprend au moins une inductance par phase, chaque phase correspondant notamment à une branche a, b, c. Chaque inductance a une première borne, formant une borne d'entrée du convertisseur alternatif-continu PFC, et une deuxième borne connectée à un bras, ledit bras étant connecté entre la borne de sortie haute et la borne de sortie basse du convertisseur alternatif-continu du convertisseur alternatif continu PFC triphasé. Dans le mode de réalisation représenté à la figure 3, chaque bras comprend deux interrupteurs Q1, Q2, Q3, Q4, Q5, Q6 de manière à relier l'inductance correspondante d'une part à la borne de sortie haute du convertisseur alternatif-continu PFC, via un interrupteur respectif, et d'autre part à la borne de sortie basse du convertisseur alternatif-continu PFC, via un interrupteur respectif.

Deux circuits convertisseurs continu-continu LLC1, LLC2, en l'espèce formés de deux circuits résonnants LLC1, LLC2 isolés, sont connectés en sortie du convertisseur alternatif-continu PFC, pour former un convertisseur continu-continu LLC.

Lesdits circuits convertisseurs continu-continu LLC1, LLC2 sont connectés en série en entrée, les bornes d'entrée de chaque circuit convertisseur continu-continu étant connectées aux bornes de sortie du convertisseur alternatif-continu PFC. Autrement dit, le convertisseur alternatif-continu PFC triphasé comprend des bornes d'entrées destinées à être connectées à un réseau électrique extérieur, une borne de sortie haute et une borne de sortie basse. Un premier circuit convertisseur continu-continu LLC1 présente une borne d'entrée haute connectée à la borne de sortie haute du convertisseur alternatif-continu et un deuxième circuit convertisseur continu-continu LLC2 présente une borne d'entrée basse connectée à la borne de sortie basse du convertisseur alternatif-continu PFC triphasé. La borne d'entrée basse du premier circuit convertisseur continu-continu LLC1 est par ailleurs connectée à la borne d'entrée haute du deuxième circuit convertisseur continu-continu LLC2, et la borne de sortie haute du premier circuit convertisseur LLC1 est connectée à la borne de sortie haute du deuxième circuit convertisseur continu-continu LLC2, la borne de sortie basse du premier circuit convertisseur LLC1 étant connectée à la borne de sortie basse du deuxième circuit convertisseur continu-continu LLC2.

Grâce à cette topologie dans laquelle les deux circuits résonnants LLC1, LLC2, assurant la fonction de convertisseurs continu-continu, sont symétriques, avec une même tension d'entrée et une même tension de sortie imposée, la tension au point milieu des circuits convertisseur de tension se trouve naturellement équilibrée.

En pratique, selon le mode de réalisation de la figure 3, correspondant à des implémentations classiques de circuits résonnants LLC1, LLC2, lesdits circuits résonnant sont isolés galvaniquement et comprennent un circuit primaire avec, respectivement, des interrupteurs commandés Q7, Q8 pour le circuit résonnant LLC1, Q9, Q10 pour le circuit résonnant LLC2, des capacités de résonnances Cr/2 et des inductances de résonnance Lr1, respectivement Lr2. En outre, les circuits résonnants isolés LLC1, LLC2 comprennent, au secondaire, une partie redresseur formée par les diodes D1, D2, D3, D4 pour le circuit résonnant LLC1 et D5, D6, D7, D8 pour le circuit résonnant LLC2.

Chaque circuit convertisseur continu-continu LLC1, LLC2 comporte alors un circuit primaire et un circuit secondaire, lesdits circuits primaires étant connectés en série entre la borne de sortie haute et la borne de sortie basse du convertisseur alternatif-continu PFC triphasé et lesdits circuits secondaires étant connectés en parallèle, entre une borne de sortie haute et une borne de sortie basse dudit convertisseur continu-continu LLC.

Par ailleurs, lesdits deux circuits convertisseurs continu-continu LLC1, LLC2 fonctionnent de préférence avec un entrelacement. Par ailleurs, selon un mode de réalisation préféré, lesdits circuits convertisseurs continu-continu LLC1, LLC2 sont déphasés de 90°.

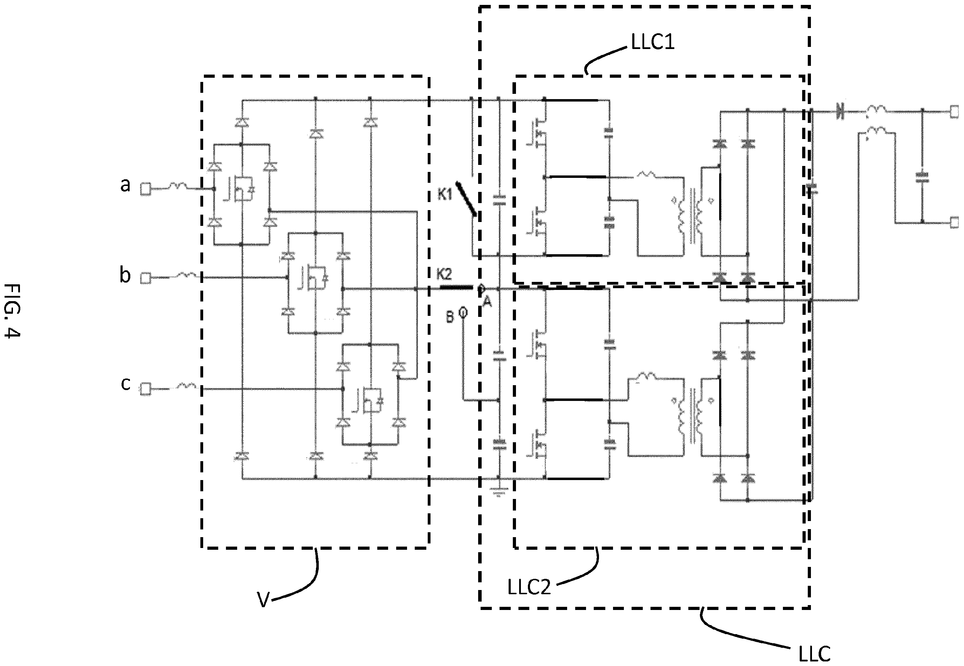

Selon l'invention, un moyen est prévu pour court-circuiter l'un des circuits convertisseurs continu-continu LLC1 ou LLC2 lorsque le convertisseur alternatif-continu PFC triphasé est connecté à un réseau électrique externe monophasé. En référence à la figure 3, un interrupteur S1 est par ailleurs connecté entre le point de connexion de sortie haut ou le point de connexion de sortie bas du convertisseur alternatif-continu PFC et le point milieu des circuits convertisseurs de tension. Cet interrupteur S1 permet ainsi, lorsqu'il est commandé à l'état passant, de court-circuiter l'un des circuits convertisseurs continu-continu LLC1, LLC2. Sur la figure 4, c'est le circuit LLC1 qui peut être court-circuité, mais il est bien entendu possible de configurer le système pour que le circuit résonnant susceptible d'être court-circuité soit le circuit résonnant LLC2.

Alternativement, en lieu et place d'un interrupteur dédié S1, les interrupteurs Q7, Q8 ou Q9, Q10, peuvent être respectivement commandés pour court-circuiter l'un des circuits convertisseurs continu-continu LLC1, LLC2.

Les capacités Clink1, Clink2 situées entre les bornes d'entrée du premier circuit convertisseur de tension LLC1 et entre les bornes du deuxième circuit convertisseur LLC2 ont pour fonction d'atténuer les ondulations de la tension délivrée aux circuits convertisseurs continu-continu LLC1, LLC2.

Comme évoqué précédemment, la présente invention permet de bénéficier d'un rendement élevé du système de chargeur électrique, que le réseau électrique externe alimentant les convertisseurs PFC soit triphasé ou monophasé.

Dans le premier exemple de de réalisation, en mode de fonctionnement triphasé, le système de chargeur électrique selon l'invention est configuré pour que les deux circuits convertisseurs continu-continu LLC1, LLC2 reçoivent du courant délivré par le convertisseur alternatif-continu PFC. Selon le mode de réalisation préféré de la figure 3, l'interrupteur S1 est ainsi commandé à l'état non passant. Le convertisseur alternatif-continu PFC triphasé fonctionne à pleine puissance sur ses trois branches et délivre de façon symétrique la moitié de cette puissance à chaque circuit convertisseur continu-continu LLC1, LLC2.

Par exemple, pour une application représentative d'un système de chargeur électrique de véhicule, chaque phase du convertisseur alternatif-continu PFC peut traiter un courant de 10 A, la puissance totale délivrée par le convertisseur alternatif-continu PFC triphasé étant de l'ordre de 7 kW et la tension aux bornes de sortie du convertisseur alternatif-continu constitué des trois convertisseurs PFC est typiquement comprise entre 680 V et 870 V. Chaque convertisseur continu-continu LLC1, LLC2 reçoit une puissance de 3,5 kW fournit un courant e 12 A, de sorte que l'on obtient un courant de 24 A en sortie du convertisseur continu-continu constitué des deux circuits convertisseurs continu-continu LLC1, LLC2, avec une tension comprise entre 220 V et 470 V.

En mode de fonctionnement monophasé, le système de chargeur électrique selon l'invention est configuré pour qu'un seul des deux circuits convertisseurs continu-continu LLC1, LLC2 reçoive du courant délivré par le convertisseur alternatif-continu PFC. En l'espèce, toujours selon le mode de réalisation de la figure 3, l'interrupteur S1 est commandé à l'état passant. L'un des circuits convertisseurs continu-continu, en l'espèce le circuit convertisseur continu-continu LLC1, est court-circuité. Deux branches du convertisseur alternatif-continu PFC triphasé sont utilisées pour délivrer une tension au circuit convertisseur continu-continu actif en l'espèce LLC2.

Pour poursuivre l'application ci-dessus, un seul courant de 10 A est ici délivré. La puissance totale délivrée par le convertisseur alternatif-continu PFC est typiquement de l'ordre de 2,2 kW et la tension aux bornes de sortie du convertisseur alternatif-continu PFC triphasé est typiquement comprise entre 340 V et 435 V. Le deuxième circuit convertisseur continu-continu LLC2 - le premier circuit convertisseur continu-continu LLC1 étant court-circuité, reçoit la puissance de 2,2 kW, de sorte que l'on obtient un courant de 8 A en sortie du convertisseur continu-continu LLC, avec une tension de sortie comprise entre 220 V et 470 V.

Par ailleurs, il est à noter que, dans le système de chargeur électrique selon l'invention, le courant de « ripple », autrement dit le courant d'ondulation circulant dans la capacité de sortie Cout, commune aux deux convertisseurs de tension continu-continu LLC1, LLC2, se trouve réduit. Le bruit est également réduit, ce qui autorise la mise en œuvre de capacités Cout, C₀ moindres en sortie du système de chargeur électrique.

La figure 4 montre un deuxième exemple de réalisation du système de chargeur électrique selon l'invention, dans lequel le convertisseur alternatif-continu triphasé est un circuit de type Vienna V.

En sortie du circuit de type Vienna V, deux interrupteurs sont connectés : l'interrupteur K1 permet de court-circuiter un circuit convertisseur continu-continu LLC1. Sur la figure 4, c'est le premier circuit convertisseur continu-continu LLC1 qui peut être court-circuité, mais il est bien entendu possible de configurer le système pour que le circuit résonnant susceptible d'être court-circuité soit le deuxième circuit convertisseur continu-continu LLC2.

Le deuxième interrupteur K2 permet de délivrer un courant issu du circuit de type Vienna V, pris au niveau d'un point milieu M dudit circuit de type Vienna V. Le deuxième circuit convertisseur continu-continu comprend un bras capacitif connecté entre la borne d'entrée haute et la borne d'entrée basse du deuxième circuit convertisseur continu-continu LLC2, et le deuxième interrupteur K2, connecté à la borne de sortie intermédiaire, est configuré pour, dans le mode de fonctionnement triphasé, relier la borne de sortie intermédiaire avec le point de connexion entre les deux circuits convertisseurs continu-continu LLC1, LLC2 (position A) ; et, dans le mode de fonctionnement monophasé, relier la borne de sortie intermédiaire avec un point milieu du bras capacitif du deuxième circuit convertisseur continu-continu LLC2 (position B).

Les modes de fonctionnement triphasé et monophasé de ce deuxième exemple de réalisation sont pour le reste identiques à ce qui a été décrit pour le premier exemple de réalisation. Seulement, l'interrupteur K2 se trouve donc en position A dans le mode de fonctionnement triphasé et en position B dans le mode de fonctionnement monophasé.

Il est à noter qu'un avantage induit par l'utilisation d'un convertisseur alternatif-continu PFC triphasé ou d'un circuit de type Vienna V réside par ailleurs dans le fait que, dans le mode de fonctionnement triphasé, il n'est pas nécessaire qu'il y ait une connexion à un neutre du réseau électrique extérieur.

Il est rappelé par ailleurs que les modes de réalisation décrits ci-dessus ne sont pas limitatifs et que la présente invention est susceptible d'être mise en œuvre selon des modes de réalisation alternatifs à la portée de l'homme de l'art, sans sortir du cadre de l'invention défini par les revendications suivantes.

## Revendications

1. Système de chargeur électrique destiné à charger une batterie depuis un réseau électrique extérieur, notamment destiné à être embarqué dans un véhicule électrique ou hybride pour charger une batterie, entrainant le véhicule, depuis un réseau électrique extérieur audit véhicule, ledit système électrique comprenant :
un convertisseur alternatif-continu triphasé (PFC) comprenant des bornes d'entrées destinées à être connectées à un réseau électrique extérieur, une borne de sortie haute et une borne de sortie basse,
un convertisseur continu-continu (LLC), ledit convertisseur continu-continu (LLC) présentant deux circuits convertisseurs continu-continu (LLC1, LLC2), un premier circuit convertisseur continu-continu (LLC1) ayant une borne d'entrée haute connectée à la borne de sortie haute du convertisseur alternatif-continu (PFC) et un deuxième circuit convertisseur continu-continu (LLC2) ayant une borne d'entrée basse connectée à la borne de sortie basse du convertisseur alternatif-continu (PFC),
la borne d'entrée basse du premier circuit convertisseur continu-continu (LLC1) étant connectée à la borne d'entrée haute du deuxième circuit convertisseur continu-continu (LLC2), et,
la borne de sortie haute du premier circuit convertisseur (LLC1) étant connectée à la borne de sortie haute du deuxième circuit convertisseur continu-continu (LLC2) et la borne de sortie basse du premier circuit convertisseur (LLC1) étant connectée à la borne de sortie basse du deuxième circuit convertisseur continu-continu (LLC2), ledit système étant **caractérisé en ce que** le convertisseur continu-continu (LLC) est configuré pour que, dans un mode de fonctionnement triphasé, lesdits premier et deuxième circuits convertisseurs continu-continu (LLC1, LLC2) reçoivent du courant délivré par le convertisseur alternatif-continu (PFC), et pour que, dans un mode de fonctionnement monophasé, un seul desdits premier et deuxième circuits convertisseurs continu-continu (LLC1, LLC2) reçoive du courant délivré par le convertisseur alternatif-continu (PFC).

2. Système de chargeur électrique selon la revendication 1, comprenant au moins un interrupteur (S1, K1) configuré pour court-circuiter l'entrée de l'un desdits premier et deuxième circuits convertisseurs continu-continu (LLC1, LLC2) dans le mode de fonctionnement monophasé.

3. Système de chargeur électrique selon la revendication 2, dans lequel l'interrupteur (S1, K1) relie la borne de sortie haute du convertisseur alternatif-continu (PFC) ou la borne de sortie basse du convertisseur alternatif-continu (PFC) au point de connexion entre la borne d'entrée basse du premier circuit convertisseur continu-continu (LLC1) et la borne d'entrée haute du deuxième circuit convertisseur (LLC2), et dans lequel, dans le mode de fonctionnement monophasé, l'interrupteur (S1, K1) est passant pour court-circuiter l'entrée du circuit convertisseur continu-continu (LLC1) entre les bornes d'entrée duquel l'interrupteur (S1, K1) est connecté.

4. Système de chargeur électrique selon l'une des revendications précédentes, dans lequel chaque circuit convertisseur continu-continu (LLC1, LLC2) comprend un circuit primaire et un circuit secondaire, lesdits circuits primaires étant connectés en série entre la borne de sortie haute et la borne de sortie basse du convertisseur alternatif-continu triphasé, et lesdits circuits secondaires étant connectés en parallèle, entre une borne de sortie haute et une borne de sortie basse dudit convertisseur continu-continu (LLC).

5. Système de chargeur électrique selon la revendication précédente, dans lequel lesdits premier et deuxième circuits convertisseurs continu-continu (LLC1, LLC2) consistent chacun en un circuit résonnant.

6. Système de chargeur électrique selon l'une des revendications précédentes, dans lequel lesdits premier et deuxième circuits convertisseurs continu-continu (LLC1, LLC2) sont configurés pour fonctionner avec un entrelacement.

7. Système de chargeur électrique selon la revendication précédente et la revendication 2, dans lequel lesdits premier et deuxième circuits convertisseurs continu-continu (LLC1, LLC2) sont configurés pour fonctionner avec un entrelacement dans le mode de fonctionnement triphasé.

8. Système de chargeur électrique selon la revendication 6 ou 7, dans lequel lesdits premier et deuxième circuits convertisseurs continu-continu (LLC1, LLC2) sont déphasés de 90°.

9. Système de chargeur électrique selon l'une des revendications précédentes, dans lequel le convertisseur alternatif-continu triphasé (PFC) comprend au moins une inductance par phase, chaque inductance ayant une première borne formant une borne d'entrée du convertisseur alternatif-continu (PFC), et une deuxième borne connectée à un bras, ledit bras étant connecté entre la borne de sortie haute et la borne de sortie basse du convertisseur alternatif-continu du convertisseur alternatif continu triphasé (PFC).

10. Système de chargeur électrique selon la revendication précédente, dans lequel chaque bras comprend deux interrupteurs (Q1, Q2, Q3, Q4, Q5, Q6) de manière à relier l'inductance correspondante d'une part à la borne de sortie haute du convertisseur alternatif-continu (PFC), via un interrupteur respectif, et d'autre part à la borne de sortie basse du convertisseur alternatif-continu (PFC), via un interrupteur respectif.

11. Système de chargeur électrique selon l'une des revendications 1 à 9, dans lequel le convertisseur alternatif-continu triphasé comprend un circuit de type Vienna (V) et une borne de sortie intermédiaire.

12. Système de chargeur électrique selon la revendication précédente et la revendication 2 ou 3, dans lequel le circuit convertisseur continu-continu (LLC2) qui n'est pas court-circuité par l'interrupteur (S1, K1) comprend un bras capacitif connecté entre la borne d'entrée haute et la borne d'entrée basse dudit circuit convertisseur continu-continu (LLC2),
le système comportant un deuxième interrupteur (K2) connecté à la borne de sortie intermédiaire et configuré pour, dans le mode de fonctionnement triphasé, relier la borne de sortie intermédiaire avec le point de connexion entre les deux circuits convertisseurs continu-continu (LLC1, LLC2) ; et, dans le mode de fonctionnement monophasé, relier la borne de sortie intermédiaire avec un point milieu du bras capacitif du convertisseur continu-continu (LLC2) qui n'est pas court-circuité par l'interrupteur (S1, K1).

13. Système de chargeur électrique selon l'une quelconque des revendications précédentes, dans lequel le convertisseur continu-continu (LLC) est isolé galvaniquement.

## Patentansprüche

1. Elektrisches Ladesystem, das zum Laden einer Batterie ab einem äußeren Stromnetz bestimmt ist, insbesondere zum Einbau in ein Elektro- oder Hybridfahrzeug zum Laden einer Antriebsbatterie des Fahrzeugs ab einem zum Fahrzeug äußeren Stromnetz bestimmt ist, wobei das elektrische System umfasst:
einen dreiphasigen AC-DC-Wandler (PFC), umfassend Eingangsklemmen, die zum Anschluss an ein äußeres Stromnetz bestimmt sind, eine obere Ausgangsklemme und eine untere Ausgangsklemme,
einen DC-DC-Wandler (LLC), wobei der DC-DC-Wandler (LLC) zwei DC-DC-Wandlerschaltkreise (LLC1, LLC2) aufweist, einen ersten DC-DC-Wandlerschaltkreis (LLC1) mit einer oberen Eingangsklemme, die an die obere Ausgangsklemme des AC-DC-Wandlers (PFC) angeschlossen ist, und einen zweiten DC-DC-Wandlerschaltkreis (LLC2) mit einer unteren Eingangsklemme, die an die untere Ausgangsklemme des AC-DC-Wandlers (PFC) angeschlossen ist,
wobei die untere Eingangsklemme des ersten DC-DC-Wandlerschaltkreises (LLC1) an die obere Eingangsklemme des zweiten DC-DC-Wandlerschaltkreises (LLC2) angeschlossen ist, und
wobei die obere Ausgangsklemme des ersten Wandlerschaltkreises (LLC1) an die obere Ausgangsklemme des zweiten DC-DC-Wandlerschaltkreises (LLC2) angeschlossen ist und die untere Ausgangsklemme des ersten Wandlerschaltkreises (LLC1) an die untere Ausgangsklemme des zweiten DC-DC-Wandlerschaltkreises (LLC2) angeschlossen ist,
wobei das System **dadurch gekennzeichnet ist, dass** der DC-DC-Wandler (LLC) konfiguriert ist, damit in einem dreiphasigen Betriebsmodus der erste und zweite DC-DC-Wandlerschaltkreis (LLC1, LLC2) Strom empfangen, der von dem AC-DC-Wandler (PFC) bereitgestellt wird, und damit in einem einphasigen Betriebsmodus ein einziger von dem ersten und zweiten DC-DC-Wandlerschaltkreis (LLC1, LLC2) Strom empfängt, der von dem AC-DC-Wandler (PFC) bereitgestellt wird.

2. Elektrisches Ladesystem nach Anspruch 1, umfassend mindestens einen Schalter (S1, K1), der konfiguriert ist, um den Eingang von einem von dem ersten und zweiten DC-DC-Wandlerschaltkreis (LLC1, LLC2) im einphasigen Betriebsmodus kurzzuschließen.

3. Elektrisches Ladesystem nach Anspruch 2, wobei der Schalter (S1, K1) die obere Ausgangsklemme des AC-DC-Wandlers (PFC) oder die untere Ausgangsklemme des AC-DC-Wandlers (PFC) mit dem Anschlusspunkt zwischen der unteren Eingangsklemme des ersten DC-DC-Wandlerschaltkreises (LLC1) und der oberen Eingangsklemme des zweiten Wandlerschaltkreises (LLC2) verbindet und wobei im einphasigen Betriebsmodus der Schalter (S1, K1) durchlässig ist, um den Eingang des DC-DC-Wandlerschaltkreises (LLC1), an den der Schalter (S1, K1) angeschlossen ist, zwischen den Eingangsklemmen kurzzuschließen.

4. Elektrisches Ladesystem nach einem der vorangehenden Ansprüche, wobei jeder DC-DC-Wandlerschaltkreis (LLC1, LLC2) einen Primärkreis und einen Sekundärkreis umfasst, wobei die Primärkreise in Reihe zwischen der oberen Ausgangsklemme und der unteren Ausgangsklemme des dreiphasigen AC-DC-Wandlers angeschlossen sind, und die Sekundärkreise parallel zwischen einer oberen Ausgangsklemme und einer unteren Ausgangsklemme des DC-DC-Wandlers (LLC) angeschlossen sind.

5. Elektrisches Ladesystem nach vorangehendem Anspruch, wobei der erste und zweite DC-DC-Wandlerschaltkreis (LLC1, LLC2) jeweils aus einem Schwingkreis bestehen.

6. Elektrisches Ladesystem nach einem der vorangehenden Ansprüche, wobei der erste und zweite DC-DC-Wandlerschaltkreis (LLC1, LLC2) konfiguriert sind, um mit einem Interleaving zu funktionieren.

7. Elektrisches Ladesystem nach vorangehendem Anspruch und Anspruch 2, wobei der erste und zweite DC-DC-Wandlerschaltkreis (LLC1, LLC2) konfiguriert sind, um mit einem Interleaving im dreiphasigen Betrieb zu funktionieren.

8. Elektrisches Ladesystem nach Anspruch 6 oder 7, wobei der erste und zweite DC-DC-Wandlerschaltkreis (LLC1, LLC2) um 90° phasenverschoben sind.

9. Elektrisches Ladesystem nach einem der vorangehenden Ansprüche, wobei der dreiphasige AC-DC-Wandler (PFC) mindestens eine Induktanz je Phase umfasst, wobei jede Induktanz eine erste Klemme hat, die eine Eingangsklemme des AC-DC-Wandlers (PFC) bildet, und eine zweite Klemme, die an einen Arm angeschlossen ist, wobei der Arm zwischen der oberen Ausgangsklemme und der unteren Ausgangsklemme des AC-DC-Wandlers des dreiphasigen AC-DC-Wandlers (PFC) angeschlossen ist.

10. Elektrisches Ladesystem nach vorangehendem Anspruch, wobei jeder Arm zwei Schalter (Q1, Q2, Q3, Q4, Q5, Q6) umfasst, so dass die entsprechende Induktanz zum einen mit der oberen Ausgangsklemme des AC-DC-Wandlers (PFC) über einen jeweiligen Schalter und zum anderen die untere Ausgangsklemme des AC-DC-Wandler (PFC) über einen jeweiligen Schalter verbunden ist.

11. Elektrisches Ladesystem nach einem der Ansprüche 1 bis 9, wobei der dreiphasige AC-DC-Wandler einen Schaltkreis von Typ Vienna (V) und eine Übergangs-Ausgangsklemme umfasst.

12. Elektrisches Ladesystem nach vorangehendem Anspruch und Anspruch 3 oder 4, wobei der DC-DC-Wandlerschaltkreis (LLC2), der nicht von dem Schalter (S1, K1) kurzgeschlossen ist, einen kapazitiven Arm umfasst, der zwischen der oberen Eingangsklemme und der unteren Eingangsklemme des DC-DC-Wandlerschaltkreises (LLC2) angeschlossen ist,
wobei das System einen zweiten Schalter (K2) aufweist, der an die Übergangs-Ausgangsklemme angeschlossen und konfiguriert ist, um im dreiphasigen Betriebsmodus die Übergangs-Ausgangsklemme mit dem Anschlusspunkt zwischen den zwei DC-DC-Wandlerschaltkreisen (LLC1, LLC2) zu verbinden; und im einphasigen Betriebsmodus die Übergangs-Ausgangsklemme mit einem Mittelpunkt des kapazitiven Arms des DC-DC-Wandlers (LLC2) zu verbinden, der von dem Schalter (S1, K1) nicht kurzgeschlossen ist.

13. Elektrisches Ladesystem nach einem der vorangehenden Ansprüche, wobei der DC-DC-Wandler (LLC) galvanisch isoliert ist.

## Claims

1. Electric charger system intended to charge a battery from an outside power grid, in particular intended to be on board an electric or hybrid vehicle to charge battery, driving the vehicle, from a power grid outside said vehicle, said electric system comprising:
a three-phase AC/DC converter (PFC) comprising input terminals intended to be connected to an outside power grid, a high output terminal and a low output terminal,
a DC/DC converter (LLC), said DC/DC converter (LLC) having two DC/DC converter circuits (LLC1, LLC2), a first DC/DC converter circuit (LLC1) having a high input terminal connected to the high output terminal of the DC/DC converter (PFC) and a second DC/DC converter circuit (LLC2) having a low input terminal connected to the low output terminal of the DC/DC converter (PFC),
the low input terminal of the first DC/DC converter circuit (LLC1) being connected to the high input terminal of the second DC/DC converter circuit (LLC2), and
the high output terminal of the first converter circuit (LLC1) being connected to the high output terminal of the second DC/DC converter circuit (LLC2) and the low output terminal of the first converter circuit (LLC1) being connected to the low output terminal of the second DC/DC converter circuit (LLC2),
said system being **characterized in that** the DC/DC converter (LLC) is configured so that, in a three-phase operating mode, said first and second DC/DC converters (LLC1, LLC2) receive current delivered by the DC/DC converter (PFC), and so that, in a single-phase operating mode, only one of said first and second DC/DC converter circuits (LLC1, LLC2) receives current delivered by the DC/DC converter (PFC).

2. Electric charger system according to claim 1, comprising at least one switch (S1, K1) configured to short-circuit the input of one of said first and second DC/DC converter circuits (LLC1, LLC2) in the single-phase operating mode.

3. Electric charger system according to claim 2, wherein said switch (S1, K1) connects the high output terminal of the DC/DC converter (PFC) or the low output terminal of the DC/DC converter (PFC) to the connection point between the low input terminal of the first DC/DC converter circuit (LLC1) and the high input terminal of the second converter circuit (LLC2), and in which, in the single-phase operating mode, the switch (S1, K1) is on so as to short-circuit the input of the DC/DC converter circuit (LLC1) between the input terminals of which the switch (S1, K1) is connected.

4. Electric charger system according to one of the preceding claims, wherein each DC/DC converter circuit (LLC1, LLC2) comprises a primary circuit and a secondary circuit, said primary circuits being connected in series between the high output terminal and the low output terminal of the three-phase DC/DC converter, and said secondary circuits being connected in parallel, between a high output terminal and a low output terminal of said LLC DC/DC converter (LLC).

5. Electric charger system according to the preceding claim, wherein said first and second DC/DC converter circuits (LLC1, LLC2) each consist of a resonant circuit.

6. Electric charger system according to one of the preceding claims, wherein said first and second DC/DC converter circuits (LLC1, LLC2) are configured to operate with interleaving.

7. Electric charger system according to the preceding claim and claim 2, wherein said first and second DC/DC converter circuits (LLC1, LLC2) are configured to operate with interleaving in the three-phase operating mode.

8. Electric charger system according to claim 6 or 7, wherein said first and second DC/DC converter circuits (LLC1, LLC2) are phase-shifted by 90°.

9. Electric charger system according to one of the preceding claims, wherein the three-phase DC/DC converter (PFC) comprises at least one inductance per phase, each inductance having a first terminal forming an input terminal of the DC/DC converter (PFC), and a second terminal connected to an arm, said arm being connected between the high output terminal and the low output terminal of the DC/DC converter of the three-phase DC/DC converter (PFC).

10. Electric charger system according to the preceding claim, wherein each arm comprises two switches (Q1, Q2, Q3, Q4, Q5, Q6) so as to connect the corresponding inductance on the one hand to the high output terminal of the DC/DC converter (PFC), via a respective switch, and on the other hand to the low output terminal of the DC/DC converter (PFC), via a respective switch.

11. Electric charger system according to one of claims 1 to 9, wherein the three-phase DC/DC converter comprises a Vienna-type circuit (V) and an intermediate output terminal.

12. Electric charger system according to the preceding claim and claim 2 or 3, wherein the DC/DC converter circuit (LLC2) that is not short-circuited by the switch (S1, K1) comprises a capacitive arm connected between the high input terminal and the low input terminal of said DC/DC converter circuit (LLC2),
the system including a second switch (K2) connected to the intermediate output terminal and configured so as, in the three-phase operating mode, to connect the intermediate output terminal with the connection point between the two DC/DC converter circuits (LLC1, LLC2); and, in the single-phase operating mode, so as to connect the intermediate output terminal with a midpoint of the capacitive arm of the DC/DC converter (LLC2) which is not short-circuited by the switch (S1, K1).

13. Electric charger system according to any of the preceding claims, wherein the DC/DC converter circuit (LLC) is galvanically isolated.
